# EUROPEAN PATENT APPLICATION

(11) **EP 4 553 747 A1**
(43) Date of publication of application: **14.05.2025**
(21) Application number: 23835120.9
(22) Date of filing: 12.04.2023
(51) Int. Cl.: G06Q 50/00

(54) **SUPPORT SYSTEM FOR CARBON DIOXIDE EMISSION TRADING AND METHOD FOR SUPPORTING CARBON DIOXIDE EMISSION TRADING**

(30) Priority: 05.07.2022 JP 2022108280
(71) Applicant: Niterra Co., Ltd., Nagoya-shi, Aichi 461-0005 (JP)
(72) Inventor: YANAGAWA Takayuki, Nagoya-shi, Aichi 461-0005 (JP); KAWASE Hiroki, Nagoya-shi, Aichi 461-0005 (JP)
(74) Representative: Grünecker Patent- und Rechtsanwälte PartG mbB
(86) International application number: PCT/JP2023/014866
(87) International publication number: WO 2024/009579

(57) **Abstract**

A support system (8) for carbon dioxide emission trading is provided with: a management system (10) that has a token issuance unit (10A); and a manager wallet (20) associated with the management system (10). If a consumption signal, in which a user account and a user wallet (40) have been associated and which executes notification with respect to an amount of carbon dioxide consumed, has been sent to the management system (10) from a user terminal (30) associated with the user account, then the token issuance unit (10A) issues a token on the basis of the consumption signal, and the management system (10) instructs that the issued token be stored in the user wallet (40).

## Description

### TECHNICAL FIELD

The present disclosure relates to a support system for carbon dioxide emission trading and to a method for supporting carbon dioxide emission trading.

### BACKGROUND ART

Patent Literature 1 discloses a carbon dioxide emission trading system. The system disclosed in Patent Literature 1 is composed of a plurality of trading terminals and a trading site. In this system, each of the plurality of trading terminals includes a means for sending to the trading site sell and buy orders, containing conditions of trading carbon dioxide emission rights, and a means for receiving a piece of information sent from the trading site and representing the results of the trading and outputting the received piece of information. In this system, the trading site includes an accepting means for accepting orders of selling and buying carbon dioxide emission rights from the trading terminals, a matching means for determining those that match the trading conditions, etc.

### CITATION LIST

### PATENT LITERATURE

Patent Literature 1: JP2002-149978A

### SUMMARY OF INVENTION

### TECHNICAL PROBLEM

In the trading system disclosed in Patent Literature 1, when carbon dioxide emissions are traded, the trading site matches the trading conditions of sell orders with the trading conditions of buy orders. In this trading system, even when an entity having no emission right consumes (reduces) carbon dioxide, that entity cannot obtain any emission right, and, even when an entity having an emission right consumes (reduces) carbon dioxide, that entity cannot increase its emission right. Accordingly, consumption (reduction) of carbon dioxide is unlikely to be promoted, and there has been room for improvement.

An object of the present invention is to provide a technique for facilitating the promotion of consumption (reduction) of carbon dioxide.

### SOLUTION TO PROBLEM

A support system for carbon dioxide emission trading according to one mode of the present invention comprises:
a management system having a token issuance section for issuing a token; and
a manager wallet associated with the management system,
wherein, in the case where a user account and a user wallet are associated with each other, and a consumption signal for notifying an amount of consumption of carbon dioxide is sent from a user terminal associated with the user account to the management system, the token issuance section issues the token on the basis of the consumption signal, and the management system instructs storage of the issued token in the user wallet.

A method for supporting carbon dioxide emission trading according to another mode of the present invention uses:
a management system having a token issuance section for issuing a token; and
a manager wallet associated with the management system,
wherein, in the case where a user account and a user wallet are associated with each other, and a consumption signal for notifying an amount of consumption of carbon dioxide is sent from a user terminal associated with the user account to the management system, the token issuance section issues the token on the basis of the consumption signal, and the management system instructs storage of the issued token in the user wallet.

### ADVANTAGEOUS EFFECT OF INVENTION

The present invention facilitates promotion of consumption (reduction) of carbon dioxide.

### BRIEF DESCRIPTION OF DRAWINGS

[FIG. 1] FIG. 1 is an explanatory diagram schematically showing a trading system to which a support system for carbon dioxide emission trading according to a first embodiment is applied.
[FIG. 2] FIG. 2 is an explanatory diagram used for describing the trading system of FIG. 1 from a point of view different from FIG. 1.
[FIG. 3] FIG. 3(A) is an explanatory diagram schematically showing the correspondence between a manager account and a manager wallet stored in a blockchain. FIG. 3(B) is an explanatory diagram schematically showing the correspondence between each user account and each user wallet stored in the blockchain. FIG. 3(C) is an explanatory diagram schematically showing the correspondence between each emitter account and each emitter wallet stored in the blockchain.
[FIG. 4] FIG. 4 is an explanatory diagram used for describing exchange of data among a management system, a user terminal, an emitter terminal, and respective wallets in the trading system of FIG. 1.
[FIG. 5] FIG. 5 is an explanatory diagram used for describing exchange of data by a method different from the method in FIG. 4.

### DESCRIPTION OF EMBODIMENTS

Examples of embodiments are listed in the following [1] to [20].
[1] A support system for carbon dioxide emission trading comprising:
   a management system having a token issuance section for issuing a token; and
   a manager wallet associated with the management system,
   wherein, in the case where a user account and a user wallet are associated with each other, and a consumption signal for notifying an amount of consumption of carbon dioxide is sent from a user terminal associated with the user account to the management system, the token issuance section issues the token on the basis of the consumption signal, and the management system instructs storage of the issued token in the user wallet.

The support system of the above [1] can provide an incentive to a user contributing to consumption (reduction) of carbon dioxide by sending tokens to the user wallet.

[2] The support system for carbon dioxide emission trading described in [1], wherein, when a sell request that requests selling of the token stored in the user wallet is notified from the user terminal to the management system, the management system moves the token from the user wallet to the manager wallet on the basis of the sell request.

The support system of the above [2] executes a transaction of moving the token from the user wallet to the manager wallet on the basis of the request. By virtue of this, the token stored in the user wallet can be moved to the manager wallet at any time in response to the sell request. Therefore, it becomes easier for the user to use the token more freely.

[3] The support system for carbon dioxide emission trading described in [2], wherein, in the case where an emitter account and an emitter wallet are associated with each other, and a buy request that requests buying of the token is notified from an emitter terminal associated with the emitter account to the management system, the management system moves the token from the manager wallet to the emitter wallet on the basis of the buy request.

In the support system of the above [3], in the case where a sell request is sent from the user terminal and a buy request is sent from the emitter terminal, on the basis of the requests, the management system executes a transaction of moving the token from the manager wallet to the emitter wallet. By virtue of this, it is possible to move the token from the user wallet to the manager wallet once and then move the token to the emitter wallet. This support system easily moves the token from the user wallet to the emitter wallet even when the timing of the sell request and the timing of the buy request differ.

[4] The support system for carbon dioxide emission trading described in [1] or [2], wherein, in the case where an emitter account and an emitter wallet are associated with each other, and a buy request that requests buying of the token is notified from an emitter terminal associated with the emitter account to the management system and a sell request that requests selling of the token stored in the user wallet is notified from the user terminal to the management system, the management system moves the token from the user wallet to the emitter wallet on the basis of the buy request and the sell request.

In the support system of the above [4], in the case where a sell request is sent from the user terminal and a buy request is sent from the emitter terminal, on the basis of the requests, the management system executes a transaction of moving the token from the user wallet to the emitter wallet. By virtue of this, it is possible to move the token from the user wallet to the emitter wallet while eliminating temporary storage of the token in the manager wallet. Therefore, the support system can further reduce the burden of the manager wallet.

[5] The support system for carbon dioxide emission trading described in [3] or [4], wherein the management system includes a certificate issuance section, and wherein, in the case where the token is stored in the emitter wallet, after an issuance request that requests issuance of an emission right use certificate is notified from the emitter terminal to the management system, the management system deletes the token stored in the emitter wallet on the basis of the issuance request, and the certificate issuance section issues the emission right use certificate to the emitter account.

The support system of the above [5] can prove by the emission right use certificate that an entity (emitter) operating the emitter terminal has used the token and that the entity has obtained an emission right from a third party.

[6] The support system for carbon dioxide emission trading described in any one of [1] to [5], wherein the management system includes a certificate issuance section, and the certificate issuance section issues a consumption certificate to the user account on the basis of the consumption signal.

The support system of the above [6] can issue a consumption certificate to the user account on the basis of the consumption signal. Therefore, an entity (user) corresponding to the user account can make use of the consumption certificate as a proof showing that the user is contributing to consumption of carbon dioxide.

[7] The support system for carbon dioxide emission trading described in any one of [1] to [6], wherein the user terminal generates and sends the consumption signal on the basis of a result of monitoring by a consumption amount monitoring section which monitors the amount of carbon dioxide consumed by the user.

The support system of the above [7] can issue tokens in an amount that matches the actual consumption situation by reflecting the highly accurate consumption amount obtained on the basis of the result of monitoring by the consumption amount monitoring section.

[8] The support system for carbon dioxide emission trading described in any one of [1] to [7], wherein the token issuance section issues the token while setting a validity period, and includes an invalidating section which invalidates the token when the validity period set for the token elapses.

When a token is issued on the basis of the consumption signal, the support system of the above [8] can make use of the token while setting a validity period.

[9] The support system for carbon dioxide emission trading described in any one of [1] to [8], wherein the management system records at least one of a history of the consumption signal and a history of trading of the token on the blockchain after hashing the history(s) .

The support system of the above [9] can manage at least one of the history of the consumption signal and the history of trading of tokens by using a blockchain, thereby preventing falsification of the histories, whereby the system can be operated more stably.

[10] A method for supporting carbon dioxide emission trading in which a management system having a token issuance section for issuing a token, and a manager wallet associated with the management system are used, wherein, in the case where a user account and a user wallet are associated with each other, and a consumption signal for notifying an amount of consumption of carbon dioxide is sent from a user terminal associated with the user account to the management system, the token issuance section issues the token on the basis of the consumption signal, and the management system instructs storage of the issued token in the user wallet.

The method for supporting carbon dioxide emission trading of the above [10] can provide an incentive to a user contributing to consumption (reduction) of carbon dioxide by sending tokens to the user wallet.

[11] The method for supporting carbon dioxide emission trading described in [10], wherein, when a sell request that requests selling of the token stored in the user wallet is notified from the user terminal to the management system, the management system moves the token from the user wallet to the manager wallet on the basis of the sell request.

The method for supporting carbon dioxide emission trading of the above [11] achieves the same effect as the support system for carbon dioxide emission trading of the above [2].

[12] The method for supporting carbon dioxide emission trading described in [11], wherein, in the case where an emitter account and an emitter wallet are associated with each other, and a buy request that requests buying of the token is notified from an emitter terminal associated with the emitter account to the management system, the management system moves the token from the manager wallet to the emitter wallet on the basis of the buy request.

The method for supporting carbon dioxide emission trading of the above [12] achieves the same effect as the support system for carbon dioxide emission trading of the above [3].

[13] The method for supporting carbon dioxide emission trading described in [10] or [11], wherein, in the case where an emitter account and an emitter wallet are associated with each other, and a buy request that requests buying of the token is notified from an emitter terminal associated with the emitter account to the management system and a sell request that requests selling of the token stored in the user wallet is notified from the user terminal to the management system, the management system moves the token from the user wallet to the emitter wallet on the basis of the buy request and the sell request.

The method for supporting carbon dioxide emission trading of the above [13] achieves the same effect as the support system for carbon dioxide emission trading of the above [4].

[14] The method for supporting carbon dioxide emission trading described in [12] or [13], wherein the management system includes a certificate issuance section, and wherein, in the case where the token is stored in the emitter wallet, after an issuance request that requests issuance of an emission right use certificate is notified from the emitter terminal to the management system, the management system deletes the token stored in the emitter wallet on the basis of the issuance request, and the certificate issuance section issues the emission right use certificate to the emitter account.

The method for supporting carbon dioxide emission trading of the above [14] achieves the same effect as the support system for carbon dioxide emission trading of the above [5].

[15] The method for supporting carbon dioxide emission trading described in any one of [10] to [14], wherein the management system includes a certificate issuance section, and the certificate issuance section issues a consumption certificate to the user account on the basis of the consumption signal.

The method for supporting carbon dioxide emission trading of the above [15] achieves the same effect as the support system for carbon dioxide emission trading of the above [6].

[16] The method for supporting carbon dioxide emission trading described in any one of [9] to [15], wherein the user terminal generates and sends the consumption signal on the basis of a result of monitoring by a consumption amount monitoring section which monitors the amount of carbon dioxide consumed by the user.

The method for supporting carbon dioxide emission trading of the above [17] achieves the same effect as the support system for carbon dioxide emission trading of the above [7].

[17] The method for supporting carbon dioxide emission trading described in any one of [10] to [16], wherein the token issuance section issues the token while setting a validity period, and includes an invalidating section which invalidates the token when the validity period set for the token elapses.

The method for supporting carbon dioxide emission trading of the above [17] achieves the same effect as the support system for carbon dioxide emission trading of the above [8].

[18] The method for supporting carbon dioxide emission trading described in any one of [10] to [17], wherein the management system records at least one of a history of the consumption signal and a history of trading of the token on the blockchain after hashing the history(s).

The method for supporting carbon dioxide emission trading of the above [18] achieves the same effect as the support system for carbon dioxide emission trading of the above [9].

[19] A program used in a support system for carbon dioxide emission trading comprising a management system having a token issuance section for issuing a token, and a manager wallet associated with the management system,
wherein, in the case where a user account and a user wallet are associated with each other, and a consumption signal for notifying an amount of consumption of carbon dioxide is sent from a user terminal associated with the user account to the management system, the program causes the token issuance section to perform a process of issuing the token on the basis of the consumption signal, and causes the management system to instruct that the issued token be stored in the user wallet.

The program of the above [19] achieves the same effect as the support system for carbon dioxide emission trading of the above [1].

[20] A program used in a support system for carbon dioxide emission trading comprising a management system having a token issuance section for issuing a token, a manager wallet associated with the management system, and a user wallet associated with a user account,
the support system for carbon dioxide emission trading being a system in which, when a consumption signal for notifying an amount of consumption of carbon dioxide is sent to the management system, the token issuance section issues the token to the user wallet on the basis of the consumption signal, and
the program causing a user terminal associated with the user account to perform a process of generating the consumption signal and sending the consumption signal to the management system.

The program of the above [20] can cause the user terminal to perform the process of generating and sending the consumption signal.

### <First embodiment >

### 1. Configuration of carbon dioxide emission trading system 1

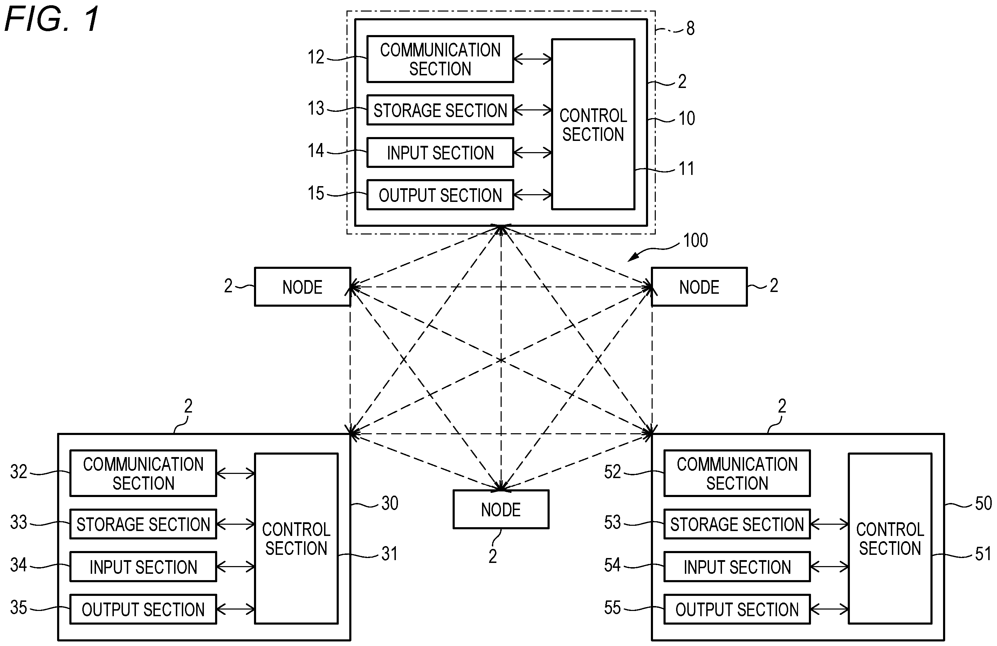

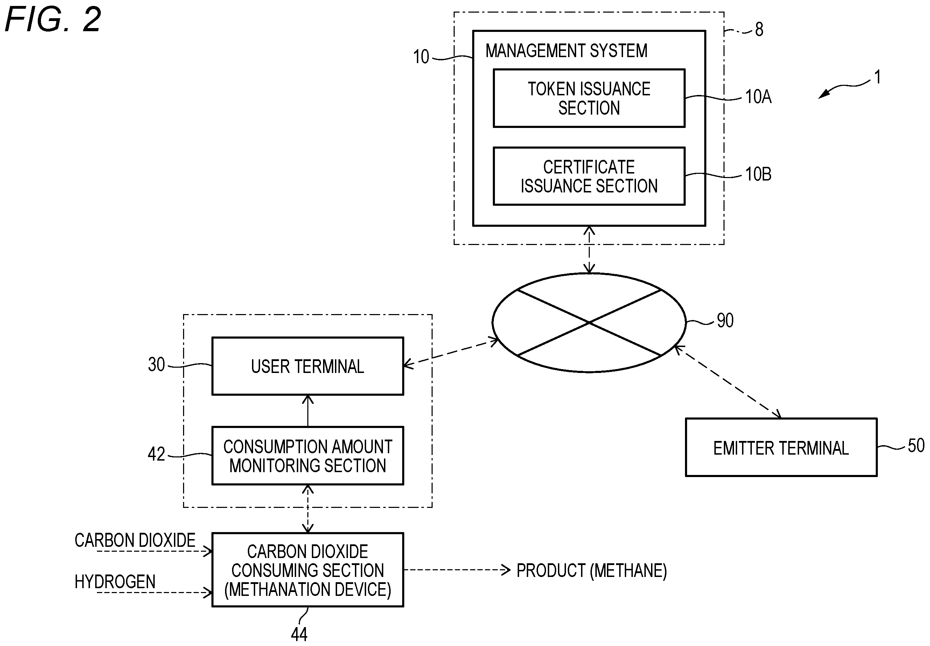

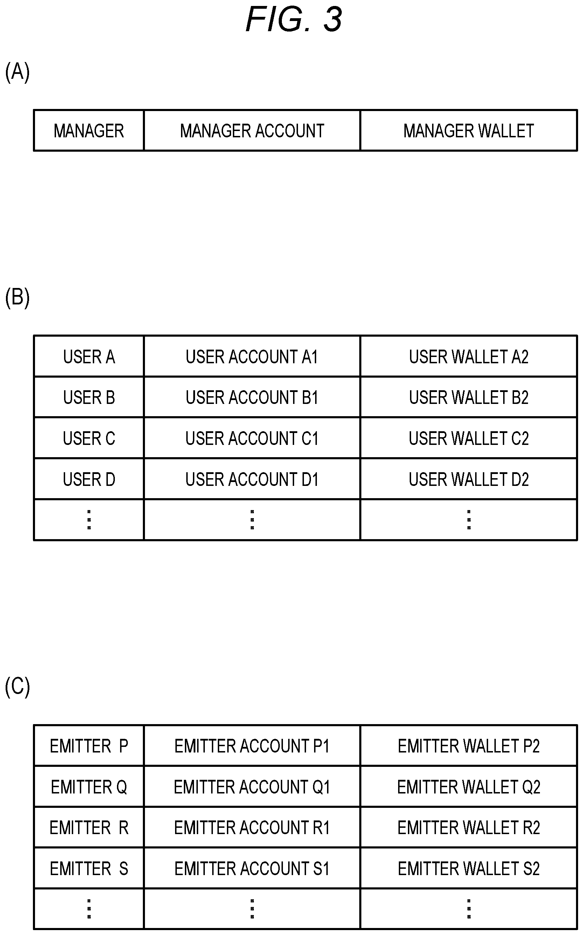

FIG. 1 is an explanatory diagram schematically showing a carbon dioxide emission trading system 1. The carbon dioxide emission trading system 1 will be also referred to simply as the trading system 1. In the trading system 1 which is a typical example and which will be described below, at least a management system 10 and a manager wallet 20 (FIG. 3) are provided so as to realize a carbon dioxide emission trading support system 8. Notably, in FIGS. 1 and 2, the manager wallet 20 (FIG. 3) is not shown. The carbon dioxide emission trading support system 8 will be also referred to simply as the support system 8.

The trading system 1 has a plurality of nodes 2. Each node 2 is a device for implementing a blockchain. The blockchain realized by the plurality of nodes 2 may be a public blockchain (public chain), a private blockchain (private chain), or any other type of blockchain.

In the case where the trading system 1 is implemented as a private blockchain, when each trade described below is executed, a transaction indicating the details of the trade is generated, and the generated transaction is verified and approved by the plurality of nodes 2. Then, a predetermined node such as a manager node (for example, a node 2 constituting a management system 10) or a node designated by the manager node or the like calculates a hash value, and a block is configured from the approved transaction by using the calculated hash value. The configured block is added to the blockchain and is distributed to and stored in each node 2. Meanwhile, in the case where the trading system 1 is implemented as a public blockchain, when each trade described below is executed, a transaction indicating the details of the trade is generated, and the generated transaction is verified and approved by a node 2. Then, one of miners calculates a hash value, and a block is configured from the approved transaction by using the calculated hash value. The configured block is added to the blockchain and is distributed to and stored in each node 2.

Each of the nodes 2 constituting the trading system 1 is configured by an information processing device, for example, a server, a personal computer, or the like. Although six nodes 2 are shown in FIG. 1 as an example, the number of the nodes 2 may be larger or smaller than that in the example of FIG. 1.

Some of the nodes 2 constitute the management system 10. The management system 10 includes a control section 11, a communication section 12, a storage section 13, an input section 14, an output section 15, etc. The storage section 13 is a device for storing programs, parameters, etc. therein. The control section 11 executes various functions and processes of the node 2 in accordance with the programs and various types of data (parameters, etc.) stored in the storage section 13. The communication section 12 is a device for performing wired communication or wireless communication with an external device in cooperation with the control section 11. The input section 14 is an input device such as an operation device, and the output section 15 is an output device such as a display device. The management system 10 may be composed of one device (e.g., one server device) or may be composed of a plurality of devices.

Some of the nodes 2 constitute a user terminal 30. The user terminal 30 includes a control section 31, a communication section 32, a storage section 33, an input section 34, an output section 35, etc. The hardware configuration of the user terminal 30 may be the same as or different from the hardware configuration of the management system 10.

Some of the nodes 2 constitute an emitter terminal 50. The emitter terminal 50 includes a control section 51, a communication section 52, a storage section 53, an input section 54, an output section 55, etc. The hardware configuration of the emitter terminal 50 may be the same as or different from the hardware configuration of the management system 10.

In FIG. 1, the specific configurations of the nodes 2 other than the management system 10, the user terminal 30, and the emitter terminal 50 are not shown. However, any of the nodes 2 whose configurations are not shown may be configured as the user terminal 30 or may be configured as the emitter terminal 50. The user terminal 30 shown in FIG. 1 may have the function of the emitter terminal 50. The emitter terminal 50 may have the function of the user terminal 30.

As shown in FIG. 2, a token issuance section 10A and a certificate issuance section 10B are contained in the management system 10. In the typical example which will be described below, the control section 11 (FIG. 1) functions as the token issuance section 10A and the certificate issuance section 10B. The token issuance section 10A has a function of issuing a token. The certificate issuance section 10B has a function of issuing an emission right use certificate and a consumption certificate. The token is a virtual currency or right used for trading in the trading system 1.

As shown in FIG. 2, at a site where the user terminal 30 is disposed, a carbon dioxide consuming section 44 which consumes carbon dioxide and a consumption amount monitoring section 42 which monitors the amount of carbon dioxide consumed by the carbon dioxide consuming section 44 are provided. An example of the carbon dioxide consuming section 44 is a methanation device for producing methane from hydrogen and carbon dioxide. The carbon dioxide consuming section 44 is not limited to a known methanation device, but may be another device which consumes carbon dioxide and produces another substance by converting or using the carbon dioxide. The consumption amount monitoring section 42 may have any configuration so long as it can detect the amount of carbon dioxide consumed (reduced) by the carbon dioxide consuming section 44. For example, in the case where the carbon dioxide consuming section 44 is the above-mentioned methanation device, the carbon dioxide consuming section 44 detects the amount of carbon dioxide consumed (reduced) in a process in which the methanation device produces methane.

**In** the present embodiment, as shown in FIG. 3(A), a manager account is assigned to a manager such that the manager account is associated with the manager, a manager wallet 20 is associated with the manager account, and the manager account and the manager wallet are stored in the blockchain 100 such that they are associated with each other. The manager account is a piece of identification information for specifying the manager. The manager is an entity which manages the issuance of tokens. In the blockchain 100, when the manager account is specified, the content of the manager wallet 20 is specified. The manager wallet 20 is a wallet associated with the management system 10. The manager wallet 20 is a virtual place where tokens handled by the management system 10 (manager's tokens) are stored and is a virtual place associated with the manager account.

In the present embodiment, user accounts are assigned to respective users such that the user accounts are associated with the respective users, and user wallets 40 are associated with the user accounts. For example, as shown in FIG. 3(B), the respective user accounts and the respective user wallets are stored in the blockchain 100 such that the respective user wallets are associated with the respective user accounts. Each user account is an account associated with a corresponding user wallet and a piece of identification information for specifying a user. The user is an entity which receives an issued token(s) by consuming carbon dioxide. The user wallet is a virtual place where tokens owned by the user are stored and is a virtual storage place associated with the user account. In the blockchain 100, for example, when a user account A1 is specified, the content of a user wallet A2 associated with the user account A1 is found. The user terminal 30 is a terminal used when communications and/or trading based on the user account is performed and is a terminal associated with the user account. Ther user terminal 30 may include the consumption amount monitoring section 42 (FIG. 2) or may be separated from the consumption amount monitoring section 42.

In the present embodiment, emitter accounts are assigned to respective emitters such that the emitter accounts are associated with the respective emitters, and emitter wallets 60 are associated with the emitter accounts. For example, as shown in FIG. 3(C), the respective emitter accounts and the respective emitter wallets are stored in the blockchain 100 such that the respective emitter wallets are associated with the respective emitter accounts. Each emitter account is an account associated with a corresponding emitter wallet and a piece of identification information for specifying an emitter. The emitter is an entity which buys tokens. Notably, any user may become an emitter, and any emitter may become a user. The emitter wallet is a virtual place where tokens owned by the emitter are stored and is a virtual storage place associated with the emitter account. In the blockchain 100, for example, when an emitter account P1 is specified, the content of an emitter wallet P2 associated with the emitter account P1 is found. The emitter terminal 50 (FIG. 1, etc.) associated with the emitter account is a terminal used when communications and/or trading based on the emitter account is performed.

### 2. Operation of carbon dioxide emission trading system 1

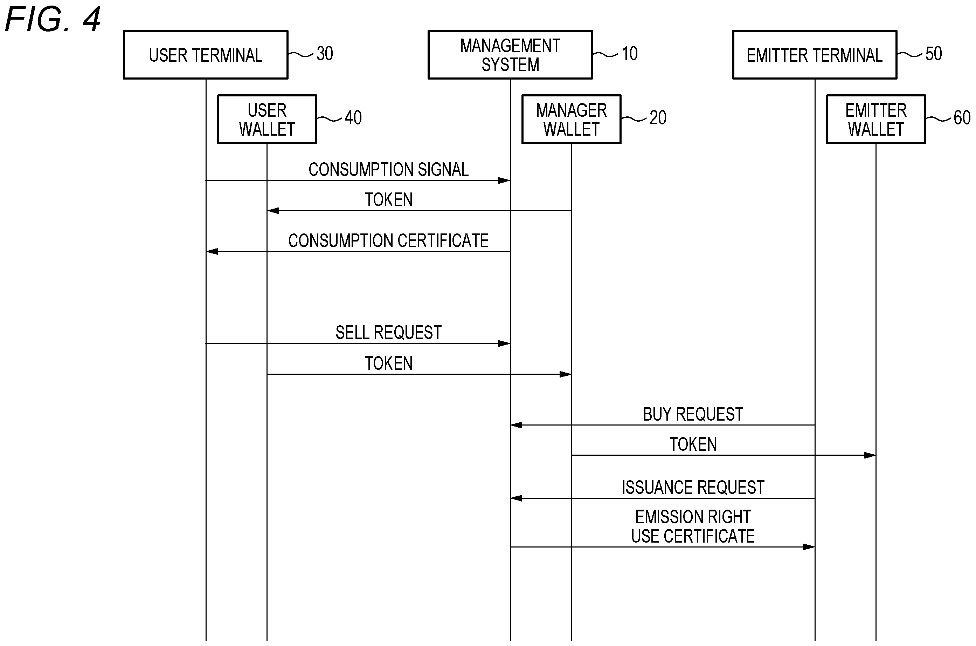

In the trading system 1, the user terminal 30 generates and sends a consumption signal on the basis of the result of monitoring by the consumption amount monitoring section 42. In the case where carbon dioxide has been consumed in the carbon dioxide consuming section 44, the consumption amount monitoring section 42 detects the amount of carbon dioxide consumed by the carbon dioxide consuming section 44 and notifies the detected carbon dioxide consumption amount to the user terminal 30. In the case where the user terminal 30 has obtained the carbon dioxide consumption amount from the consumption amount monitoring section 42, as shown in FIG. 4, the user terminal 30 sends to the management system 10 a consumption signal containing a piece of information representing the consumption amount.

As shown in FIG. 4, in the case where the consumption signal (a signal which notifies the amount of carbon dioxide consumed by the user) is sent to the management system 10 from the user terminal 30 associated with the user account, the token issuance section 10A (FIG. 2) of the management system 10 issues a token(s) on the basis of the consumption signal. Since a consumption amount of carbon dioxide per token is determined beforehand, on the basis of this information, the token issuance section 10A converts to tokens the consumption amount specified by the consumption signal sent by the user terminal 30. The consumption amount of carbon dioxide per token is, for example, 1 ton. In this example, in the case where the consumption amount of carbon dioxide specified by the consumption signal is 10 tons, the token issuance section 10A issues 10 tokens. When the token issuance section 10A issues a token(s), the token issuance section 10A determines the validity period of the token(s). The validity period may be, for example, a period from the date of issue until a predetermined number of days elapses (e.g., until 8 years elapses), or until a predetermined date comes.

The token issuance section 10A also functions as an invalidation section and performs a process of invalidating the token(s) when the validity period set for the token(s) has elapsed. In the case where the token issuance section 10A invalidates a token(s), the token issuance section 10A may instruct a wallet which possesses the token(s) whose validity period has elapsed to delete the token(s), or may invalidate the token(s) by any of other methods.

In the case where the token issuance section 10A has issued a token(s), the management system 10 (for example, the token issuance section 10A) instructs storage of the issued token(s) in the user wallet 40. In the case where the token issuance section 10A has issued a token(s), the management system 10 (for example, the token issuance section 10A) may instruct storing the issued token(s) in the user wallet 40 directly or instruct storing the token(s) in the manager wallet 20 once and moving the token(s) to the user wallet 40 so as to store the token(s) therein. In either case, the issued token(s) is finally stored in the user wallet 40.

In the case where, in response to the consumption signal sent from the user terminal 30 to the management system 10, the token issuance section 10A has issued a token(s) to the user wallet 40, the certificate issuance section 10B of the management system 10 issues a consumption certificate to the user account on the basis of the above-mentioned consumption signal. The consumption certificate includes a piece of information which certifies that carbon dioxide has been consumed in the consumption amount specified by the above-mentioned consumption signal. The consumption certificate includes, as pieces of information, the name of the user specified by the user account and the fact that carbon dioxide has been consumed in the above-mentioned consumption amount. In addition, a piece of information related to a certifier (for example, the name of the manager) may be included. The above-mentioned consumption certificate is desirably electronic data containing symbols, such as letters and numerals, and images. In the case of the consumption certificate is the above-mentioned electronic data, the user terminal 30 which can perform communications and trading on the basis of the user account can obtain the above-mentioned consumption certificate. In the case where the above-mentioned consumption certificate is issued (given) to the user account, the user terminal 30 can store and use the consumption certificate as electronic data. Alternatively, the above-mentioned consumption certificate may be formed on a medium, such as a sheet of paper, by means of, for example, printing.

In the present embodiment, the management system 10 records at least one (preferably, both) of the history of consumption signals and/or the history of trading of tokens in the above-mentioned blockchain after hashing them. Accordingly, the history of all the consumption signals sent to the management system 10 and all the histories of trading of tokens performed between the plurality of nodes 2 are hashed and then recorded in the blockchain.

As shown in FIG. 4, in the case where a sell request that requests selling of a token(s) stored in the user wallet 40 is notified from the user terminal 30 to the management system 10, the management system 10 moves the token(s) from the user wallet 40 to the manager wallet 20 on the basis of the sell request.

In the case where a buy request that requests buying of a token(s) is notified from the emitter terminal 50 associated with the emitter account to the management system 10, the management system 10 moves the token(s) from the manager wallet 20 to the emitter wallet 60 on the basis of the buy request. Notably, the buy request sent from the emitter terminal 50 to the management system 10 may be a buy request specifying only the amount of tokens, or a buy request specifying the amount of tokens and a shortest validity period.

As shown in FIG. 4, in the case where a token(s) is stored in the emitter wallet 60, after an issuance request that requests issuance of an emission right use certificate is notified from the emitter terminal 50 to the management system 10, the management system 10 deletes the token(s) stored in the emitter wallet 60 on the basis of the above-mentioned issuance request, and the certificate issuance section 10B issues the emission right use certificate to the emitter account. By virtue of this, the emitter can use a token(s) (for example, a purchased token(s)) and can receive an emission right use certificate as a certificate that certifies use of the emission right. Notably, the above-mentioned issuance request can make a request while notifying, as an upper limit, the amount of tokens stored in the wallet, or can make a request so as to use only a portion of the tokens stored in the wallet. For example, in the case where 10 tokens are stored in the emitter wallet 60, the emitter terminal 50 can receive a certificate that certifies use of any amount of emission rights by notifying an issuance request while specifying the amounts of tokens in the range of 1 to 10 tokens. The above-mentioned emission right use certificate is a certificate that certifies that the token(s) has been used. Specifically, of the tokens stored (owned) in the emitter wallet 60, tokens for which issuance of an emission right use certificate is requested by the above-mentioned issuance request are deleted by the management system 10, and an emission right use certificate containing a piece of information specifying that tokens the amount of which is equal to the amount of deleted tokens have been used is given to the emitter account. In the emission right use certificate, for example, the fact that the amount of tokens requested by the above-mentioned issuance request have been used is contained as a piece of information. In addition, the name of the emitter specified by the above-mentioned emitter account, and a piece of information related to the certifier (for example, the name of the manager) may be contained. The above-mentioned emission right use certificate is desirably electronic data containing symbols, such as letters and numerals, and images. In the case where the emission right use certificate is the above-mentioned electronic data, the emitter terminal 50 which can perform communications and trading on the basis of the emitter account can obtain the above-mentioned emission right use certificate. In the case where the above-mentioned emission right use certificate is issued (given) to the emitter account, the emitter terminal 50 can store and use the emission right use certificate as electronic data. Alternatively, the above-mentioned emission right use certificate may be formed on a medium, such as a sheet of paper, by means of, for example, printing. Notably, in the present specification, "a predetermined amount of tokens" function as an emission right for emitting carbon dioxide in an amount corresponding to the predetermined amount of tokens. "Use of the tokens stored (owned) in the emitter wallet 60" means use of emission rights in an amount corresponding to the amount of tokens which are used (tokens which are deleted). Accordingly, the emission right use certificate may contain a piece of information that specifies emission rights to be used (for example, a piece of information that certifies the right (emission right) of emitting carbon dioxide in an amount corresponding to the amount of tokens which are used (tokens which are deleted)).

### 3. Examples of Effects

The support system 8 can provide an incentive to a user contributing to consumption (reduction) of carbon dioxide by sending tokens to the user wallet. For example, in the case where tokens can be exchanged to cash, the user can turn its emission right to cash by selling tokens.

Since the support system 8 can move the token(s) stored in the user wallet 40 to the manager wallet 20 in response to a sell request, it becomes easy for the user to use tokens more freely. Namely, it becomes possible to turn tokens into cash at an arbitrary timing.

In the case where a sell request is sent from the user terminal 30 and a buy request is sent from the emitter terminal 50, the support system 8 can move a token(s) from the user wallet 40 to the manager wallet 20 once and then move the token(s) to the emitter wallet 60. The support system makes it easy to transfer a token(s) from the user wallet to the emitter wallet even when the timing of the sell request and the timing of the buy request differ. Namely, it becomes possible to turn a token(s) into cash at an arbitrary timing irrespective of whether or not matching between the sell request and the buy request has been performed successfully.

The support system 8 can prove, by using an emission right use certificate, that a person (emitter) operating the emitter terminal 50 has obtained an emission right from the user by using a token(s).

Since the support system 8 can issue a consumption certificate to the user account on the basis of the consumption signal, an entity (user) corresponding to the user account can make use of the consumption certificate as a proof showing that the user is contributing to consumption of carbon dioxide.

The support system 8 can issue tokens in an amount that matches the actual consumption situation by reflecting the highly accurate consumption amount obtained on the basis of the result of monitoring by the consumption amount monitoring section 42.

In the case where the support system 8 issues a token(s) on the basis of the consumption signal, the support system 8 can make use of the token(s) while setting a validity period.

The support system 8 can manage at least one of the history of the consumption signal and the history of trading of tokens by using the blockchain, thereby preventing falsification of the histories, whereby the system can be operated more stably.

### <Other embodiments>

The present disclosure is not limited to the embodiment described by the above description with reference to the drawings. The features of the above-described embodiment and embodiments which will be described below can be combined in any manner so long as no contradiction occurs. Also, any of the features of the above-described embodiment and the embodiments which will be described below can be omitted so long as it is not clearly described as essential. Furthermore, the features of the above-described embodiment may be changed as follows.

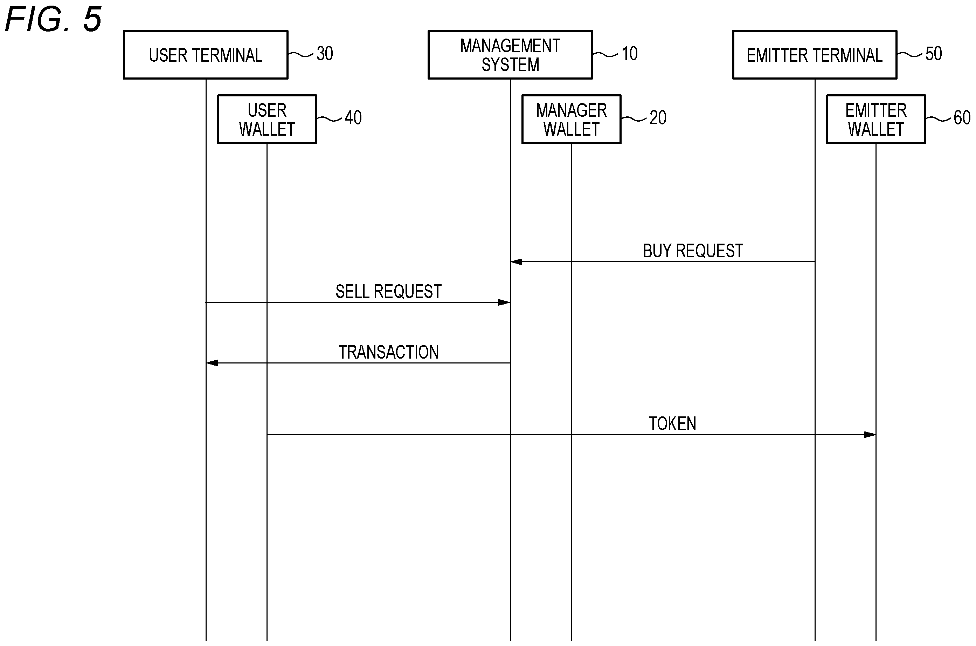

In the first embodiment, the trading shown in FIG. 4 may be changed as shown in FIG. 5. In the example of FIG. 5, in the case where a buy request that requests buying of a token(s) is notified from the emitter terminal 50 to the management system 10 and a sell request that requests selling of a token(s) stored in the user wallet 40 is notified from the user terminal 30 to the management system 10, on the basis of the buy request and the sell request, the management system 10 executes a transaction of moving a token(s) from the user wallet 40 to the emitter wallet 60. The above-mentioned transaction is an instruction of moving a token(s) from the user wallet 40 directly to the emitter wallet 60, and the user terminal 30 having received this transaction performs a process of moving a token(s) from the user wallet 40 directly to the emitter wallet 60. In this example, in the case where a sell request is sent from the user terminal 30 and a buy request is sent from the emitter terminal 50, the support system 8 matches the sell request and the buy request, thereby enabling movement of a token(s) from the user wallet 40 to the emitter wallet 60 while eliminating temporary storage of the token(s) in the manager wallet 20. Therefore, the support system 8 can further reduce the burden of the manager wallet 20.

In the above-described embodiment, the support system 8 is configured by the management system 10 and the manager wallet 20. However, either or both of the user terminal 30 and the emitter terminal 50 may be contained in the support system 8. Alternatively, either or both of the user wallet 40 and the emitter wallet 60 may be contained in the support system 8.

Notably, the embodiments disclosed this time should be considered to be illustrative and not to be restrictive in all aspects. The scope of the present invention is not limited to the embodiments disclosed this time, and it is intended that the present invention encompasses all modifications within the range shown by the claims and the range of equivalents of the claims.

### REFERENCE SIGNS LIST

8: carbon dioxide emission trading support system
10: management system
10A: token issuance section
10B: certificate issuance section
20: manager wallet
30: user terminal
40: user wallet
42: consumption amount monitoring section
44: carbon dioxide consuming section
50: emitter terminal
60: emitter wallet
100: blockchain

## Claims

1. A support system for carbon dioxide emission trading comprising:
a management system having a token issuance section for issuing a token; and
a manager wallet associated with the management system,
wherein, in the case where a user account and a user wallet are associated with each other, and a consumption signal for notifying an amount of consumption of carbon dioxide is sent from a user terminal associated with the user account to the management system, the token issuance section issues the token on the basis of the consumption signal, and the management system instructs storage of the issued token in the user wallet.

2. A support system for carbon dioxide emission trading according to claim 1,
wherein, when a sell request that requests selling of the token stored in the user wallet is notified from the user terminal to the management system, the management system moves the token from the user wallet to the manager wallet on the basis of the sell request.

3. A support system for carbon dioxide emission trading according to claim 1 or 2,
wherein, in the case where an emitter account and an emitter wallet are associated with each other, and a buy request that requests buying of the token is notified from an emitter terminal associated with the emitter account to the management system, the management system moves the token from the manager wallet to the emitter wallet on the basis of the buy request.

4. A support system for carbon dioxide emission trading according to any one of claims 1 to 3,
wherein, in the case where an emitter account and an emitter wallet are associated with each other, and a buy request that requests buying of the token is notified from an emitter terminal associated with the emitter account to the management system and a sell request that requests selling of the token stored in the user wallet is notified from the user terminal to the management system, the management system moves the token from the user wallet to the emitter wallet on the basis of the buy request and the sell request.

5. A support system for carbon dioxide emission trading according to claim 3 or 4,
wherein the management system includes a certificate issuance section, and
wherein, in the case where the token is stored in the emitter wallet, after an issuance request that requests issuance of an emission right use certificate is notified from the emitter terminal to the management system, the management system deletes the token stored in the emitter wallet on the basis of the issuance request, and the certificate issuance section issues the emission right use certificate to the emitter account.

6. A support system for carbon dioxide emission trading according to any one of claims 1 to 5,
wherein the management system includes a certificate issuance section, and wherein the certificate issuance section issues a consumption certificate to the user account on the basis of the consumption signal.

7. A support system for carbon dioxide emission trading according to any one of claims 1 to 6,
wherein the user terminal generates and sends the consumption signal on the basis of a result of monitoring by a consumption amount monitoring section which monitors the amount of carbon dioxide consumed by the user.

8. A support system for carbon dioxide emission trading according to any one of claims 1 to 7,
wherein the token issuance section issues the token while setting a validity period, and includes an invalidating section which invalidates the token when the validity period set for the token elapses.

9. A support system for carbon dioxide emission trading according to any one of claims 1 to 8,
wherein the management system records at least one of a history of the consumption signal and a history of trading of the token on the blockchain after hashing the history(s).

10. A method for supporting carbon dioxide emission trading in which a management system having a token issuance section for issuing a token, and a manager wallet associated with the management system are used,
wherein, in the case where a user account and a user wallet are associated with each other, and a consumption signal for notifying an amount of consumption of carbon dioxide is sent from a user terminal associated with the user account to the management system, the token issuance section issues the token on the basis of the consumption signal, and the management system instructs storage of the issued token in the user wallet.
